# FASCICULE DE BREVET EUROPEEN

(11) **EP 3 158 656 B1**
(45) Date de publication et mention de la délivrance du brevet: **06.11.2019**
(21) Numéro de dépôt: 15738724.2
(22) Date de dépôt: 17.06.2015
(51) Int. Cl.: H04B 3/56, H04B 3/54

(54) **SYSTÈME DE COMMANDE D'AU MOINS UN SERVOMOTEUR À PARTIR D'UN CENTRE DE CONTRÔLE/COMMANDE**
SYSTEM ZUR STEUERUNG VON MINDESTENS EINEM SERVOMOTOR AUS EINER BEFEHLS-/STEUERZENTRALE
SYSTEM FOR CONTROLLING AT LEAST ONE SERVOMOTOR FROM A COMMAND/CONTROL CENTRE

(30) Priorité: 18.06.2014 FR 1455616
(43) Date de publication de la demande: 26.04.2017
(73) Titulaire: Bernard Controls, 95500 Gonesse (FR)
(72) Inventeur: AUBER MAGUERO, Gilles, 75012 Paris (FR); FAURE, Guillaume, 75017 Paris (FR); SCHWEBEL, Dominique, 93360 Neuilly Plaisance (FR)
(74) Mandataire: Berger, Helmut
(86) Numéro de dépôt international: PCT/FR2015/051607
(87) Numéro de publication internationale: WO 2015/193615

(56) Documents cités:
- WO-A1-2008/145160
- WO-A2-2008/156741
- GB-A- 1 122 801
- JP-A- 2007 027 041
- JP-A- 2010 220 155

## Description

L'invention concerne un système de commande d'au moins un servomoteur à partir d'un centre de contrôle / commande, du type comprenant un réseau d'alimentation en énergie électrique du servomoteur et des moyens de transmission de signaux de commande au servomoteur, à partir d'un centre de commande.

Plusieurs systèmes de ce type sont déjà connus. Ainsi, il est connu dans un système à courant porteur en ligne (CPL) de superposer au courant électrique alternatif de 50 ou 60 Hz un signal de plus haute fréquence et de plus faible intensité. Lorsqu'un tel système CPL comporte plusieurs servomoteurs, ceux-ci sont montés en série si bien que le signal de commande destiné à un servomoteur doit passer par le servomoteur disposé en amont du servomoteur destinataire. Ce n'est que le premier servomoteur qui est relié directement au modem émetteur du signal.

Etant donné que le réseau électrique n'est pas blindé et que l'impédance n'est généralement pas adaptée, la plus grande partie de l'énergie injectée par le modem CPL ou par un servomoteur en destination d'un servomoteur suivant est atténuée. Par conséquent, la distance maximale entre le modem et le premier servomoteur et entre deux servomoteurs adjacents de la série est insatisfaisante. Un autre inconvénient majeur de ce système est qu'en cas de défaut d'un des servomoteurs, le modem ne peut plus dialoguer avec les servomoteurs situés en aval du servomoteur défectueux.

Un autre système connu, à raccordement point à point où chaque servomoteur est alimenté directement depuis les armoires de puissance et est relié directement via un câble au centre de contrôle / commande, présente l'inconvénient que le câble doit être un câble multi-fils dont le nombre de fils peut atteindre une quinzaine.

Encore un autre système connu utilise un bus de terrain pour remplacer le raccordement point à point et donc le câble contenant une quinzaine de fils par un câble de deux fils. Sur un tel bus de terrain, les servomoteurs sont placés en série. Ce système présente les inconvénients majeurs qu'il faut utiliser pour le bus de terrain un câble spécifique blindé et donc onéreux, aussi bien en ce qui concerne le coût d'achat que les travaux d'installation sur site. De plus, un défaut au niveau d'un servomoteur ou d'une ligne peut mettre en défaut tout le système. Afin d'améliorer la fiabilité des bus de terrain, on a recours à une redondance en dupliquant chaque câble, ce qui cependant rend le système encore plus onéreux.

On connait aussi des systèmes à liaison sans fil qui présentent l'inconvénient majeur que les servomoteurs doivent être placés de manière à créer un champ de façon que chaque servomoteur puisse relayer le signal au servomoteur suivant, ce qui est très contraignant. De plus, du fait qu'ils utilisent des liaisons radio, ils sont insuffisamment immunisés contre les brouillages. WO2008/156741 A2 divulgue un système de commande pour une pluralité de servomoteurs selon le préambule de la revendication 1.

L'invention a pour but de proposer un système qui pallie les inconvénients des systèmes connus.

Pour atteindre ce but, un système selon l'invention est caractérisé en ce que les moyens de transmission d'un signal de commande sont formés par au moins un fil de communication intégré au câble de puissance.

Selon une autre caractéristique de l'invention, le système est caractérisé en ce que les signaux de commande sont appliqués entre un fil d'alimentation en puissance et le fil de communication et en ce que ce dernier est électriquement isolé du fil de phase à ses deux extrémités.

Selon encore une autre caractéristique de l'invention, le système est caractérisé en ce qu'il comprend une isolation électrique aux deux extrémités du fil de communication, adaptée pour dissocier les signaux de la puissance.

Selon encore une autre caractéristique de l'invention, le système est caractérisé en ce que les signaux sont modulés en fréquence et comportent trois fréquences, une fréquence porteuse et deux fréquences représentant respectivement les valeurs numériques "0" et "1" .

Selon encore une autre caractéristique de l'invention, le système est caractérisé en ce qu'il comprend un dispositif d'alimentation en courant-continu des dispositifs côté servomoteur, à partir du côté du centre de contrôle / commande.

Selon encore une autre caractéristique de l'invention, le système est caractérisé en ce que le câble d'alimentation en puissance du servomoteur comprend trois fils de phase pour la puissance, un fil de terre et un fil de communication.

Selon encore une autre caractéristique de l'invention, le système est caractérisé en ce que le câble d'alimentation en puissance du servomoteur comprend un dispositif monophasé de deux fils pour la puissance, un fil de terre et un fil de communication.

Selon encore une autre caractéristique de l'invention, le système est caractérisé en ce qu'il comprend, pour l'alimentation en puissance d'un servomoteur, par le courant continu, deux fils pour la puissance, un fil de terre et un fil de communication.

Selon encore une autre caractéristique de l'invention, le système est caractérisé en ce que le centre de commande / contrôle communique avec un servomoteur par l'intermédiaire d'un modem d'interface auquel sont reliés le fil de communication et la phase de référence.

Selon encore une autre caractéristique de l'invention, le système est caractérisé en ce qu'il comporte un seul centre de commande / contrôle qui communique avec une pluralité de servomoteurs au moyen d'un concentrateur auquel sont reliés les modems d'interface des servomoteurs par l'intermédiaire d'une liaison telle que de type bus de terrain.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue schématique d'une première version de réalisation d'un système de commande d'au moins un servomoteur selon l'invention,
- la figure 2 est une vue similaire à la figure 1, montrant une deuxième version du système selon l'invention ; et
- la figure 3 est une vue schématique d'encore une autre version d'un système selon l'invention.

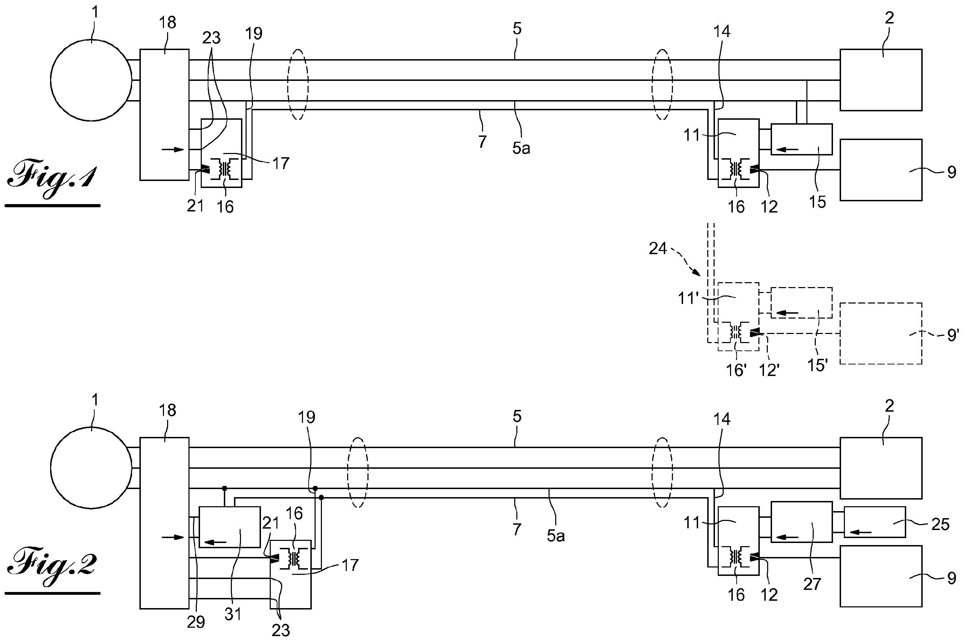

Les figures 1 et 2 montrent, à titre d'exemple non exclusif, deux versions de mise en œuvre d'un système de commande de servomoteurs électriques selon l'invention.

Dans l'exemple représenté, les références 1 et 2 désignent respectivement un servomoteur et le départ de la ligne d'alimentation en puissance du servomoteur, par l'intermédiaire d'un câble de puissance 5 qui comporte trois fils de phase en formant un dispositif triphasé.

Une particularité majeure de l'invention réside dans le fait que ce câble comporte un fil séparé, appelé fil de communication 7, qui est intégré au câble de puissance 5 tout en étant électriquement isolé des fils de puissance.

Le fil de communication 7 a pour fonction de permettre à un centre de contrôle / commande 9 de dialoguer avec le servomoteur 1. A cette fin, les signaux de communication sont appliqués entre l'un des fils de phases d'alimentation 5, noté 5a sur les figures, et ce fil de communication 7. Ces signaux ont une fréquence beaucoup plus élevée que celle du courant alternatif et une amplitude plus faible.

Il est à noter que le système selon l'invention fonctionne aussi pour d'autres types d'alimentation, à savoir monophasé et courant-continu. Le câble d'alimentation du servomoteur peut donc posséder :
- en triphasé, trois fils de phase pour la puissance, un fil de terre et un fil de communication ;
- en monophasé, deux fils pour la puissance, un fil de terre et un fil de communication ;
- en courant-continu, deux fils pour la puissance, un fil de terre et un fil de communication.

Etant donné que les signaux de communication passent entre un fil de phase et le fil de communication supplémentaire, le risque de perturbations du réseau est beaucoup plus faible que dans des systèmes connus faisant passer les signaux entre deux phases, ce qui nécessite de faire respecter des consignes strictes pour ne pas perturber le réseau. Mais, étant donné que les signaux sont sur une phase, ils doivent être isolés en début et en fin de ligne. Cette isolation se fera à travers une isolation électrique qui permet de dissocier les signaux de la puissance.

Plus précisément, comme on le voit sur la figure 1, du côté centre de contrôle / commande 9, c'est-à-dire côté utilisateur, un modem 11 est relié, d'une part, par un bornier 12 au centre de contrôle / commande 9 et, d'autre part, en 14 par deux bornes entre le fil de communication 7 et le fil de phase 5a auquel les signaux de communication sont superposés. L'alimentation en courant-continu du modem est assurée par un dispositif 15 qui produit le courant continu à partir de deux phases 5 de l'alimentation en puissance du servomoteur.

Du côté servomoteur 1, un modem 17 est associé à celui-ci par l'intermédiaire d'une interface intelligente 18. Il est également connecté en 19 entre le fil de communication 7 et le fil de phase 5a et reçoit, en 21, de l'interface intelligente 18 du servomoteur, des signaux de communication qui doivent être transmis au centre de contrôle et de commande 9. L'interface 18 alimente aussi en 23 le modem 17 en courant continu.

L'isolation électrique par rapport aux phases est assurée en 16 dans les modems 11 et 17 respectivement côté centre de contrôle / commande et côté servomoteur.

Ainsi, côté modem 11, l'alimentation 15 et les signaux au bornier 12 sont isolés des phases 5. De même, côté modem 17, on isole l'alimentation 23 et les signaux de communication en 21 des phases.

La figure 1 illustre encore en 24, en traits interrompus, la possibilité d'extension du fil de communication jusqu'à un ensemble de centre de contrôle et de commande 9' pourvu d'un modem 11' qui est éloigné du départ de la ligne d'alimentation en puissance 2, alors que, généralement, les modems sont disposés près des départ de puissance, le cas échéant dans le local de puissance même.

La figure 2 montre un système selon l'invention, qui permet de continuer une communication entre le servomoteur et le centre de contrôle et de commande 9, même en cas de perte de l'alimentation en puissance. Pour un tel cas, le système comprend du côté du centre de contrôle / commande 9 un dispositif séparé d'alimentation en courant-continu 25 qui fournit le courant-continu par l'intermédiaire d'un convertisseur DC/DC 27 au modem 11. L'alimentation, après avoir été isolée, est connectée entre le fil de phase 5a et le fil de communication 7. Le signal de communication est superposé à cette alimentation. L'alimentation courant continu et le signal de communication, sont récupérés au niveau du servomoteur, par le modem 17, isolé et connecté à l'interface intelligente 18 en 21, et par l'intermédiaire d'un convertisseur DC/DC 31. Le convertisseur 31 transforme la tension continue en alimentation DC et alimente l'interface 18 en 29 qui, ensuite, alimente le modem 17 en 23.

Il est à souligner que, dans un système selon l'invention, la distance entre le modem émetteur côté utilisateur et le servomoteur, c'est-à-dire la longueur maximale du fil de communication est d'au moins 500 mètres. Dans le cas d'un système selon la figure 2, la longueur maximale peut être encore plus grande.

Il est encore à noter la possibilité d'injecter le signal par rapport aux trois phases en même temps, afin de ne pas avoir, côté actionneur, à déterminer la bonne phase de référence du signal de communication.

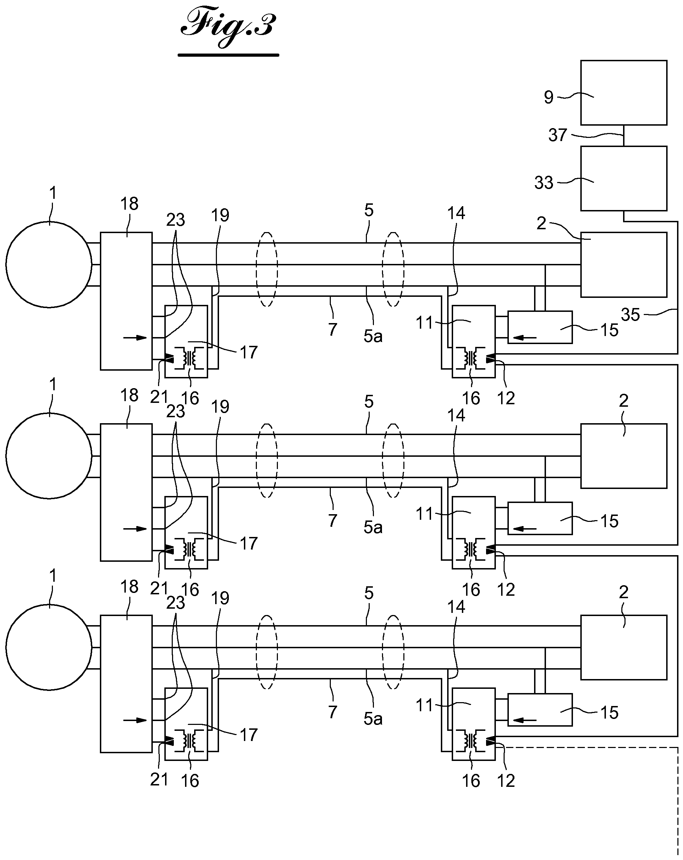

La figure 3 montre le système selon l'invention dans une version adaptée pour commander une pluralité de différents servomoteurs 1 par un centre de contrôle / de commande 9 unique, par l'intermédiaire d'un concentrateur de données 33 qui constitue une interface entre le centre de contrôle / commande et les modems 11 qui forment chacun l'interface d'un servomoteur 1. Les données, à savoir les commandes et signalisations des servomoteurs, sont concentrées dans le concentrateur, c'est-à-dire en un seul point. Les modems d'interface 11 sont reliés entre eux et au concentrateur via une liaison de type bus de terrain 35. Le concentrateur 33 est relié au centre de contrôle / commande 9 également par une liaison type bus de terrain 37 qui peut être d'un type différent de celui reliant le concentrateur aux modems.

Dans ce système, une adresse est attribuée à chaque modem d'interface 11, ce qui permet au concentrateur 33 de connaître la provenance d'une signalisation et de communiquer un ordre au servomoteur de destination. Le bus de liaison 35 peut être redondant afin d'accroître la sécurité du système.

Le système selon la figure 3 présente l'avantage de réduire le nombre de câbles entre le centre de contrôle / commande 9 et les modems d'interface 11 qui peuvent se trouver avec le départ de ligne de puissance 2 dans un local puissance.

Concernant le fonctionnement du système selon l'invention, le signal superposé à la tension d'alimentation est de type FSK, c'est-à-dire un signal modulé en fréquence. Trois fréquences sont nécessaires afin de coder un message, à savoir une fréquence porteuse, une fréquence qui équivaut à la valeur "0" et une autre fréquence qui correspond au "1". Ces deux dernières fréquences sont définies en fonction de la porteuse et du débit qui peut être choisi par exemple entre 600 bits/sec et 4800 bits/sec. Les porteuses disponibles peuvent être choisies, par exemple, entre 60 kHz et 132,5 kHz. Les fréquences de '1' et "0" pourraient être, en fonction des débits susmentionnés, par exemple, de l'ordre de 60 kHz à 135 kHz. Il est avantageux de prévoir une isolation électrique entre les fils de la phase reliés au secteur et le fil de communication avec les autres circuits de communication. Dans ce cas, un défaut d'isolation entre phase et fil de communication ne peut se transmettre sur les circuits de contrôle.

L'invention telle que décrite et représentée sur les figures, à titre d'exemple non limitatif, présente de nombreux avantages.

Par rapport à un réseau connu, au courant porteur, la distance entre le modem et le servomoteur est d'au moins 500 mètres. De plus, chaque servomoteur possède actuellement sa propre ligne d'alimentation. Avec le système décrit, chaque servomoteur reste avec un seul câble de puissance incluant le fil de communication, ce qui présente l'avantage pour l'utilisateur de ne pas avoir à changer l'architecture d'alimentation des servomoteurs. Donc, en cas de défaut, il n'affecte pas les autres servomoteurs. Le signal se situant entre une phase et un fil isolé du réseau, en raison de cette isolation, l'invention avec fil de communication permet des amplitudes plus élevées du signal tout en évitant de polluer le réseau électrique, et est moins sensible aux parasites, ce qui permet de répondre à des normes plus strictes. En effet, grâce à l'invention, on pollue moins le réseau électrique. Par conséquent, les niveaux maximum tolérés peuvent être inférieurs et donc plus stricts.

Par rapport aux systèmes au raccordement point à point, connus, le câble qui relie le servomoteur au centre de contrôle / commande est supprimé et remplacé par un simple fil ajouté dans le câble de puissance, d'où un gain économique en terme de matière première et en terme de main d'œuvre. Il n'y a qu'à raccorder cinq fils dans le cas d'un système triphasé, au lieu d'une vingtaine. Il est à noter que les câbles contenant cinq conducteurs sont communément utilisés dans l'industrie et ne posent aucun problème d'approvisionnement.

Par rapport à un système connu, du type au bus de terrain, l'invention présente l'avantage qu'au lieu d'utiliser un câble spécifique et donc onéreux, elle n'a besoin, pour le fil de communication, que d'un simple conducteur supplémentaire dans le câble d'alimentation en puissance du servomoteur. D'autre part, l'invention n'a pas besoin d'une redondance car un seul servomoteur est connecté à une liaison fil de communication. Chaque servomoteur a son propre câble de puissance et donc sa propre liaison fil de communication.

## Revendications

1. Système de commande d'au moins un servomoteur à partir d'un centre de contrôle / commande, du type comprenant un réseau d'alimentation du servomoteur en énergie électrique et des moyens de transmission de signaux de commande électriques au servomoteur, à partir d'un centre de contrôle / commande **caractérisé en ce que** ledit réseau d'alimentation est formé par un câble comprenant au moins un fil d'alimentation en puissance (5a) et les moyens de transmission de signaux sont formés par au moins un fil de communication (7) intégré au câble de puissance (5), que les signaux de commande sont appliqués entre le fil d'alimentation en puissance (5a) et le fil de communication (7) et **en ce que** ce dernier est électriquement isolé du fil d'alimentation de puissance à ses deux extrémités pour permettre de dissocier les signaux de commande de la puissance.

2. Système selon la revendication 1, **caractérisé en ce qu'**il comprend une isolation électrique aux deux extrémités du fil de communication (7), adaptée pour dissocier les signaux de la puissance.

3. Système selon l'une des revendications 1 à 2, **caractérisé en ce que** les signaux sont modulés en fréquence et comportent trois fréquences, une fréquence porteuse et deux fréquences représentant respectivement les valeurs numériques "0" et "1".

4. Système selon l'une des revendications 1 à 3, **caractérisé en ce qu'**il comprend un dispositif d'alimentation en courant-continu des dispositifs côté servomoteur, à partir du côté du centre de contrôle / commande.

5. Système selon l'une des revendications 1 à 4, **caractérisé en ce que** le câble d'alimentation en puissance du servomoteur comprend trois fils de phase (5) pour la puissance, un fil de terre et un fil de communication.

6. Système selon l'une des revendications 1 à 5, **caractérisé en ce que** le câble d'alimentation en puissance du servomoteur comprend un dispositif monophasé de deux fils pour la puissance, un fil de terre et un fil de communication.

7. Système selon l'une des revendications 1 à 6, **caractérisé en ce qu'**il comprend, pour l'alimentation en puissance d'un servomoteur, par le courant continu, deux fils pour la puissance, un fil de terre et un fil de communication.

8. Système selon l'une des revendications 1 à 7, **caractérisé en ce que** le centre de commande / contrôle (9) communique avec un servomoteur (1) par l'intermédiaire d'un modem d'interface (11) auquel sont reliés le fil de communication (7) et la phase de référence (5a) .

9. Système selon l'une des revendications 1 à 7, **caractérisé en ce qu'**il comporte un seul centre de commande / contrôle (9) qui communique avec une pluralité de servomoteurs (1) au moyen d'un concentrateur (33) auquel sont reliés les modems d'interface (11) des servomoteurs par l'intermédiaire d'une liaison (35) telle que de type bus de terrain.

## Patentansprüche

1. System zur Steuerung von mindestens einem Servomotor aus einer Befehls-/Steuerzentrale des Typs, umfassend ein Versorgungsnetz des Servomotors mit elektrischer Energie und Übertragungsmittel elektrischer Steuersignale an den Servomotor aus einer Befehls-/Steuerzentrale, **dadurch gekennzeichnet, dass** das Versorgungsnetz von einem Kabel gebildet ist, das mindestens eine Stromversorgungsader (5a) umfasst und die Signalübertragungsmittel von mindestens einer in das Stromkabel (5) integrierten Kommunikationsader (7) gebildet sind, dass die Steuersignale zwischen der Stromversorgungsader (5a) und der Kommunikationsader (7) angewendet werden und dass letztere von der Stromversorgungsader an ihren beiden Enden elektrisch isoliert ist, um die Trennung der Steuersignale vom Strom zu gestatten.

2. System nach Anspruch 1, **dadurch gekennzeichnet, dass** es eine elektrische Isolierung an den beiden Enden der Kommunikationsader (7) umfasst, die zur Trennung der Signale vom Strom geeignet ist.

3. System nach einem der Ansprüche 1 bis 2, **dadurch gekennzeichnet, dass** die Signale frequenzmoduliert sind und drei Frequenzen aufweisen, eine Trägerfrequenz und zwei Frequenzen, die jeweils die digitalen Werte "0" und "1" darstellen.

4. System nach einem der Ansprüche 1 bis 3, **dadurch gekennzeichnet, dass** es eine Vorrichtung zur Versorgung mit Gleichstrom der servomotorseitigen Vorrichtungen von Seiten der Befehls-/Steuerzentrale umfasst.

5. System nach einem der Ansprüche 1 bis 4, **dadurch gekennzeichnet, dass** das Stromversorgungskabel des Servomotors drei Phasenadern (5) für den Strom, eine Erdungsader und eine Kommunikationsader umfasst.

6. System nach einem der Ansprüche 1 bis 5, **dadurch gekennzeichnet, dass** das Stromversorgungskabel des Servomotors eine einphasige Vorrichtung aus zwei Adern für den Strom, eine Erdungsader und eine Kommunikationsader umfasst.

7. System nach einem der Ansprüche 1 bis 6, **dadurch gekennzeichnet, dass** es für die Stromversorgung eines Servomotors durch Gleichstrom zwei Adern für den Strom, eine Erdungsader und eine Kommunikationsader umfasst.

8. System nach einem der Ansprüche 1 bis 7, **dadurch gekennzeichnet, dass** die Befehls-/Steuerzentrale (9) mit einem Servomotor (1) über ein Schnittstellenmodem (11) kommuniziert, mit dem die Kommunikationsader (7) und die Referenzphase (5a) verbunden sind.

9. System nach einem der Ansprüche 1 bis 7, **dadurch gekennzeichnet, dass** es eine einzige Befehls-/Steuerzentrale (9) umfasst, die mit einer Vielzahl von Servomotoren (1) mittels eines Konzentrators (33) kommuniziert, mit dem die Schnittstellenmodems (11) der Servomotoren über eine Verbindung (35) wie z. B. vom Typ Feldbus verbunden sind.

## Claims

1. A system for controlling at least one servomotor from a command/control center, of the type comprising a grid for supplying the servomotor with electrical energy and means for transmitting electrical control signals to the servomotor, from a command/control center, **characterized in that** said supply grid is formed by a cable comprising at least one power supply wire (5a) and the signal transmission means are formed by at least one communication wire (7) integrated into the power cable (5), the control signals are applied between the power supply wire (5a) and the communication wire (7), and **in that** the latter is electrically insulated from the power supply wire at both of its ends to make it possible to separate the power control signals.

2. The system according to claim 1, **characterized in that** it comprises electrical insulation at both ends of the communication wire (7), suitable for separating the power signals.

3. The system according to one of claims 1 to 2, **characterized in that** the signals are frequency-modulated and include three frequencies, a carrier frequency and two frequencies respectively representing the digital values "0" and "1".

4. The system according to one of claims 1 to 3, **characterized in that** it comprises a direct current supply device for the devices on the servomotor side, from the command/control center side.

5. The system according to one of claims 1 to 4, **characterized in that** the power supply cable of the servomotor comprises three phase wires (5) for the power, one ground wire and one communication wire.

6. The system according to one of claims 1 to 5, **characterized in that** the power supply cable of the servomotor comprises a mono-phase device with two wires for power, a ground wire and a communication wire.

7. The system according to one of claims 1 to 6, **characterized in that** it comprises, for the power supply of a servomotor, by the direct current, two wires for power, a ground wire and a communication wire.

8. The system according to one of claims 1 to 7, **characterized in that** the control/command center (9) communicates with a servomotor (1) by means of an interface modem (11) to which the communication wire (7) and the reference phase (5a) are connected.

9. The system according to one of claims 1 to 7, **characterized in that** it includes a single control/command center (9) that communicates with a plurality of servomotors (1) using a concentrator (33) to which the interface modems (11) of the servomotors are connected by means of a link (35) of the fieldbus type.
